# EUROPEAN PATENT APPLICATION

(11) **EP 3 866 292 A1**
(43) Date of publication of application: **18.08.2021**
(21) Application number: 20157538.8
(22) Date of filing: 14.02.2020
(51) Int. Cl.: H02J 1/10, H02J 7/35, H02J 7/00

(54) **SOLAR TRACKER POWER MANAGEMENT**

(71) Applicant: Soltec Innovations, S.L., 30500 Molina de Segura (ES)
(72) Inventor: GRACIA INGLÉS, Sr. JOSÉ ÁNGEL, 30710 Los Alcázares (ES)
(74) Representative: Isern Patentes y Marcas S.L.

(57) **Abstract**

The invention relates to electric solar trackers powered by rechargeable power sources, such as rechargeable batteries and how the solar tracker is fed in order to operate. The object of the invention embraces a system and a method for operating a solar tracker mainly fed by rechargeable power sources, powered by a main power supply fed by electricity produced by a solar panel associated to the solar tracker and operated by the latter. A controller is furnished with a set of instructions aimed to manage a power flow feeding the rechargeable power sources and the operating modes for the solar tracker, either fed by the main power supply or by the rechargeable power sources.

## Description

The invention relates to the technical field of renewable energies and more particularly to solar energy.

The object of the invention is directed to managing power sources feeding an electric solar tracking device.

### BACKGROUND ART

In most battery-powered systems, there is a possibility that alternate charging and unloading moments may occur during system operation, due to the system's own characteristics. In certain types of new battery technologies (lithium, lifepo4, etc.) and according to not only the manufacturers themselves but also to some scientific works, this may cause a decrease in the estimated battery life.

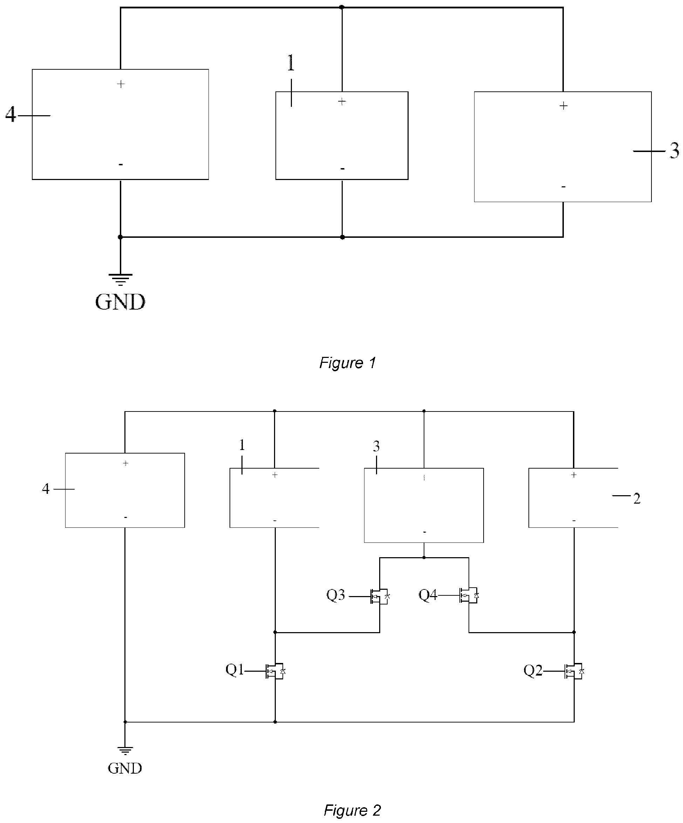

In some systems, as mentioned before, the possibility of charging and draining in isolation, namely first the charge and then the discharge, is unfeasible. For example, in a battery-powered solar tracker, both the charge and the discharge concur in time, since the process of solar tracking, which implies a battery discharge due to the consumption of the motor, is carried out during the day and it is precisely during the day when the battery could be properly charged. In this type of operation, the battery would not perform full charges or discharges (optimal) but would do small charging cycles alternated with small discharge cycles. This type of system presents the configuration that is reproduced in figure n°1.

Hitches associated to dual-battery systems have been extensively studied. In this sense WO2012054617A1 discloses a dual battery charging and discharging system that controls the configuration of multiple batteries arranged in multiple battery banks. The batteries within each bank are connected in series when powering an electrical load, such as a service motor, and are connected in parallel when charging. A microprocessor monitors the voltage levels of the batteries in each bank and controls relays to switch the electrical load over to a charged battery bank when the voltage level of the discharging battery bank drops below a minimum run threshold. The microprocessor also monitors the voltage levels of the charging battery bank and controls relays to cease charging when the voltage level rises above a minimum charge threshold. The batteries are charged by an alternator driven by a drive motor through a gear reduction system.

WO2013170274A2 discloses a digital electrical routing control system for use with electrical storage systems and conventional and alternative energy sources, and methods of using the same. In one aspect it is described a method of determining the amount of energy used by a load using a computer, with the energy being provided from a first battery and a second battery, and with other energy being supplied to charge the first battery and the second battery, the method comprising the steps of: initiating, using the computer, charging of the first battery with the other energy while the second battery is being drained by connection to the load; initiating, using the computer, charging of the second battery with the other energy while the first battery is being drained by connection to the load; and detecting, using the computer, the amount of energy consumed during an interval of time based upon an amount of charging of the first battery and the second battery during the interval of time. In another aspect, peer to peer transaction and mobile energy services are described therein as well.

DE102015222264A1 discloses a method for energy management of an energy store for electrical energy, such as an electrochemical energy storage device, and a corresponding control device. In particular, the invention relates to such a method and such a control mechanism that prevents the micro cycles during charging and discharging of the energy storage. The method disclosed aims to be a method for power management of an energy storage device for electrical energy with at least two memory cells. The method embraces at least two different modes of operation for power management, in each mode of operation one of the memory cells of the energy storage as a first memory cell and another memory cell of the energy storage is operated as a second memory cell. In each operating mode is used when shooting of energy by the energy storage device from the external source exclusively loaded the first memory cell, and discharge only the second memory cell at delivery of energy by the energy storage device to the external electrical load switching between the modes of operation takes place in dependence on the residual capacity of at least one of the first and second memory cells of the respective active mode of operation. In addition, a corresponding control device is provided for the energy management of an energy storage.

H. Shao, X. Li, C. Tsui and W. Ki, "A Novel Single-Inductor Dual-Input Dual-Output DC-DC Converter With PWM Control for Solar Energy Harvesting System," in IEEE Transactions on Very Large Scale Integration (VLSI) Systems, vol. 22, no. 8, pp. 1693-1704, Aug. 2014*.* Discloses a single-inductor dual-input dual-output dc-dc converter with pulse width modulation control is proposed for a solar energy harvesting system. The first input of the converter is from photovoltaic (PV) cells and the second input is a rechargeable battery. Apart from the conventional role of providing a regulated output voltage to power the loading circuits, the converter also clamps the PV cells' voltage to the maximum power point value to maximize efficiency. When the PV cells harvest more power than the load, the surplus energy is used to charge the rechargeable battery. When the PV cells cannot harvest enough power, the converter schedules the PV cells and the battery to power the load together. A test chip, fabricated using a 0.35-µm CMOS process and measured to verify the operation of the proposed dc-dc converter and to demonstrate the power transfer efficiency of the solar power management system, is also provided therein.

Therefore, it is desirable to provide simultaneous charging of the battery and the power supply of the equipment without harm to the life of the battery.

### SUMMARY OF THE INVENTION

The present invention discloses an electrical device which allows simultaneous charging of the battery and the power supply of the equipment without detriment to the life of the battery.

Thus, in a preferred embodiment of the present invention a circuit arrangement and a method for managing the power fed to a solar tracker, said power coming from at least two rechargeable power sources such as batteries, are provided. Said batteries being fed, and thus charged, by means of solar power converted into electricity feeding the main power supply connected to said batteries.

A first aspect of the invention is aimed to a circuit arrangement switch arrangement configured to control the flow of electricity between the power source, the solar tracker and the batteries which are electrically interconnected or wired so that the solar tracker is fed by the batteries which are further fed by the power source.

By operating the switches, the operational mode of each battery consequently is set since the electricity from the power source may then be directed to at least one of the batteries, hence charging it, or power may be drained from the battery to feed the solar tracker.

A second aspect of the present invention relates to a method for managing the power feeding a solar tracker, said power being provided by at least two rechargeable power sources.

A further embodiment of any aspect of the present invention provides a rechargeable power source defined by at least one battery furnished with at least two groups of cells, or banks; each bank acting and configured as an independent rechargeable power source. Hence the invention encompasses at least one rechargeable battery comprising in turn at least two groups of independent battery cells defining battery banks (each bank acting and configured as an independent rechargeable power source).

A third aspect of the invention is related to a device implementing either of the two first aspects of the invention.

It is worth noting that in any embodiment of whichever aspect of the present invention, the switches may be substituted by a switch hub which, properly wired and configured, might control the current flow running from/to the rechargeable power sources and/or the solar tracker.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows an illustration depicting the state of the art where a diagram of a typical configuration of battery system with charger is represented.
Figure 2.- Shows an electric diagram of one of the aspects of the object of the invention in a preferred embodiment wherein two rechargeable batteries, also referred as batteries throughout this document, are implemented as rechargeable power sources.
Figure 3.- Shows a flowchart of the method of one aspect of the object of invention aimed to power management of a solar tracker, said power being provided by at least two rechargeable power sources fed by a solar powered main power supply.

### DETAILED DESCRIPTION

In a preferred embodiment of any of the aspects of the invention, rechargeable power sources (1, 2) are connected to a main solar power supply (4) and to a solar tracker (3), and may be defined by at least two rechargeable batteries which nominal capacity (Ah) sums up the theoretical nominal capacity (Ah) required for feeding and operating a solar tracker (3).

In said preferred embodiment of the object of the invention, the rechargeable power sources (1, 2) are defined by a first and a second batteries each one preferably having half of theoretical nominal capacity (Ah) required for feeding and operating a solar tracker (3). By having two rechargeable batteries, the solar tracker (3) might be powered by one of the rechargeable batteries being an active battery, while the other rechargeable battery may be at idle state whilst recharging, being an idle battery.

In a yet preferred embodiment of the invention, the rechargeable power sources (1, 2) may be defined as groups of rechargeable battery cells defining banks, which may in turn be enclosed in a rechargeable battery; again, the respective nominal capacities (Ah) of the rechargeable power sources (1, 2) should sum up the theoretical nominal capacity required to operate the solar tracker (3).

A controller (not represented in figures) would be responsible for controlling power management based on certain configurable parameters such as: power levels and according to said parameters setting the first battery as active battery where power is taken from said first battery thus feeding the solar tracker (3), whereas the second battery is set in idle mode as idle battery where power is fed to the second battery from the, preferably solar powered, main solar power supply (4) connected to a solar panel (not represented in figures) of the solar tracker (3); in order to do so the controller is associated with a set of switches (Q1, Q2, Q3, Q4) preferably associated in pairs to each one of the rechargeable power sources (1,2) as follows:
- Between each one of the rechargeable power sources (1,2) and the main solar power supply (4); to control an electricity flow feeding said rechargeable power source (1,2) from the main solar power supply (4).
- Between each one of the rechargeable power sources (1, 2) and the solar tracker (3); to control an electricity flow feeding the solar tracker (3) from said rechargeable power source (1,2).

As per figure 2, a simple two batteries embodiment may be deployed as follows:
- A first switch (Q1) may be arranged between the first battery and the main solar power supply (4), acting as battery charger, to control an electricity flow feeding the first battery.
- A second switch (Q2) may be arranged between the second battery and the main solar power supply (4), acting as a battery charger, to control an electricity flow feeding the second battery.
- A third switch (Q3) may be arranged between the first battery and the solar tracker (3) to control an electricity flow feeding the solar tracker (3) from the first battery.
- A fourth switch (Q4) may be arranged between the second battery and the solar tracker (3) to control an electricity flow feeding the solar tracker (3) from the second battery.

Following the electric diagram of figure 2, and in order to describe a possible scenario where the first battery is meant to be charged, the first switch (Q1) is switched on allowing power to flow from the main solar power supply (4) to the first battery feeding the latter, whereas the second battery would feed the solar tracker (3) once the fourth switch (Q4) is switched on. Should we need charging the second battery, according to the electric diagram of figure 2, said second battery will then have to be fed by operating the second switch (Q2) allowing power to flow from the main solar power supply (4) to the second battery, whilst the first battery would be feeding the solar tracker (3) whilst the third switch (Q3) is switched on.

The controller may be defined by a specific device associated with the circuit arrangement or may be embedded in any one of the components of the circuit arrangement, thus furnishing said component or components of the circuit arrangement of the first aspect of the invention with instructions needed to carry out the object of the invention.

The table below shows the different operation modes according to the different combinations of states of switches (Q1, Q2, Q3, Q4) for two batteries acting as rechargeable power sources (1,2) scenario:

| Switches | | | | Operation mode |
|---|---|---|---|---|
| Q1 | Q2 | Q3 | Q4 | |
| off | off | off | off | Solar tracker (3) not fed. Batteries not fed- nor charging. |
| on | off | off | on | First battery fed- charging. Second battery feeds solar tracker (3). |
| off | on | on | off | First battery feeds solar tracker (3). Second battery fed- charging. |
| off | off | on | on | Batteries feed Solar tracker (3). Batteries not fed-nor charging. |
| on | on | off | off | Solar tracker (3) not fed. Batteries fed- charging. |

As per the table above, switching on one of the switches (Q1, Q2, Q3, Q4) allows current flow passing through, thus electrically connecting components associated thereof; consequently, feeding either at least one of the batteries and/or the solar tracker (3).

In a preferred embodiment of the invention any one of the rechargeable power sources (1, 2), i.e. batteries, is meant to have at least three different power levels:
- Recommended operative level: Minimum recommended level to start discharging the rechargeable power source (1, 2), thus feeding the solar tracker (3).
- Minimum operative level: Level from which it is not recommended to feed the solar tracker (3) from the rechargeable power source (1, 2).
- Full charge: 100% charged, level from which it is not recommended to charge any one of the rechargeable power sources (1, 2) anymore.

It is worth noting that any one of the rechargeable power sources (1, 2) may be found:
- Charging up to 100% power level.
- Charging until reaching the recommended operative level, "Battery swap delayed" in the event that the power level of one of the rechargeable power sources (1, 2) acting as active rechargeable power source, namely feeding the solar tracker (3), falls below the minimum operative level, any rechargeable power sources (1, 2) acting as idle rechargeable power source, is charged to a recommended operative level, and once this level is reached, a battery swap will be performed.
- Not charging because there is no PV power.

The following conditions are previously checked to start charging any of the rechargeable power sources (1, 2):
1. Availability of PV power
2. Rechargeable power sources (1, 2) in idle mode.
3. Rechargeable power sources (1, 2) not 100% charged; namely not being at full charge level.

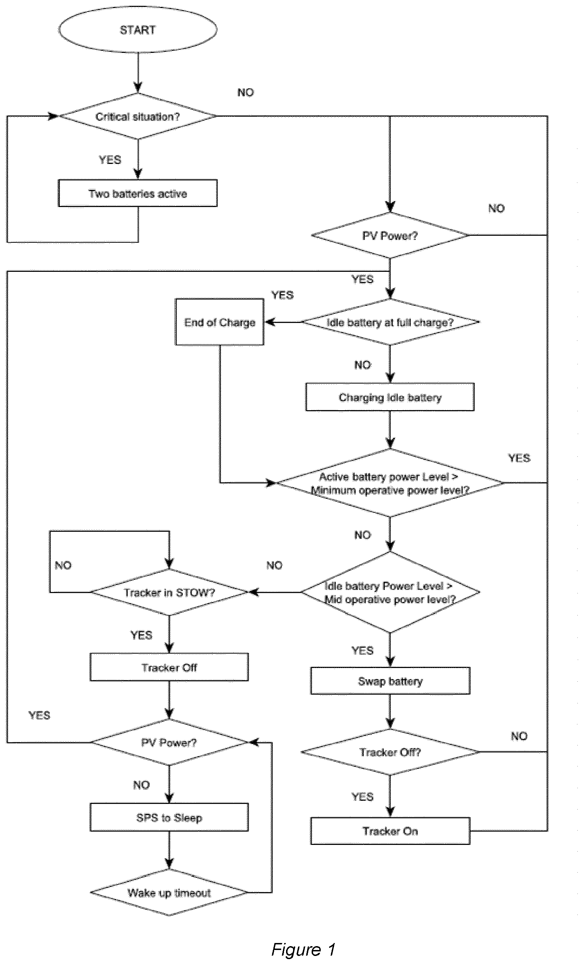

The aforementioned battery swap is further detailed in the light of figure 3, a swap (normal conditions, when it goes from being active rechargeable power source to being idle rechargeable power source) is carried out when the active rechargeable power source power level is determined to be below the minimum operative level, hence said rechargeable power source (1, 2), being the active rechargeable power source, becomes the idle rechargeable power source, please note that the idle rechargeable power source had to have a power level greater than or equal to the recommended operative level for swap to be allowed. A delayed swap is performed in the event that the charge level of the idle rechargeable power source power level is below said recommended operative level, then a battery swap will not be performed until said recommended operative level is reached at the idle rechargeable power source power level, thereby delaying the battery swap. In this case, the tracker (3) is sent to a stow position and then turned off.

Should PV power be available, then charging continues until recommended operative level is reached and battery swap is accomplished, then the solar tracker (3) is turned on and starts operating. Should PV power not be available, main solar power supply (4) is sent to sleep, that is, it is put in ultra-low power mode, and only wakes up to check if there is PV power. Should PV power be available back, then the process continues where stayed.

Should a critical situation arise, namely any situation that may endanger the structural integrity of the solar tracker (3) such as strong winds that do not allow to reach the stow position, an overload of the mechanical structure of the follower due to snow accumulation, freezing of the grease of the motor reducer making tracker movement impossible, etc. In general, an extra supply of power should be required for the engine to be able to operate the solar tracker (3). All these cases would make it impossible for the solar tracker (3) to adopt its secure/stow position and therefore, it would be exposed to environmental conditions that could damage its mechanical structure; in this case, all available rechargeable power sources (1, 2) are set to feed the solar tracker (3), once the critical situation is over, normal operating mode is set back. In order to prevent the solar tracker (3) to be damaged, this condition overrides any other condition.

## Claims

1. A circuit arrangement for managing power in a solar tracker (3), the circuit arrangement comprising:
• a main solar power supply (4),
• a solar tracker (3),
• at least two rechargeable power sources (1,2) connected to the solar tracker (3) and to the main solar power supply (4),
• a controller configured to control a set of switches (Q1, Q2, Q3, Q4) arranged between:
- each one of the rechargeable power sources (1,2) and the main solar power supply (4), to control an electricity flow feeding said rechargeable power source (1,2) from the main solar power supply (4), and
- each one of the rechargeable power sources (1, 2) and the solar tracker (3) to control an electricity flow feeding the solar tracker (3) from said first rechargeable power source (1,2).

2. Circuit arrangement for managing power in a solar tracker (3) according to claim 1, wherein the rechargeable power sources (1, 2) are defined by at least a first rechargeable battery and a second rechargeable battery independently arranged.

3. Circuit arrangement for managing power in a solar tracker (3), according to claim 1 wherein the rechargeable power sources (1, 2) are respective groups of rechargeable battery cells defining battery banks.

4. A power management method for a solar tracker (3), the method comprising feeding at least two rechargeable power sources (1,2) with respective nominal capacity (Ah) summing up the theoretical nominal capacity (Ah) required for operating the solar tracker (3) and connected to a main solar power supply (4) feeding the solar tracker (3); the method being **characterised by** comprising:
• controlling a set of switches (Q1, Q2, Q3, Q4) arranged between:
∘ each one of the rechargeable power sources (1,2) and the main solar power supply (4), to control an electricity flow feeding said rechargeable power source (1,2) from the main solar power supply (4), and
∘ each one of the rechargeable power sources (1, 2) and the solar tracker (3) to control an electricity flow feeding the solar tracker (3) from said rechargeable power source (1,2),
• feeding at least one of the rechargeable power sources (1,2) from the main solar power supply (4), and
• feeding the solar tracker (3) from at least one of the rechargeable power sources (1,2).

5. The method according to claim 4, wherein the rechargeable power sources (1, 2) comprise three different power levels:
• a recommended operative level corresponding to a power level for the rechargeable power source (1, 2) to feed the solar tracker (3),
• a minimum operative level corresponding to a power level for the rechargeable power source (1, 2) not to feed the solar tracker (3),), and
• a full charge level corresponding to a power level for the rechargeable power source (1, 2) no to charge anymore.
the method further comprising start charging any of the rechargeable power sources (1, 2) from the main solar power supply (4) only when:
• PV power is available, and
• said rechargeable power source (1, 2) is in idle mode and below full charge level.

6. The method according to either claim 4 or 5 wherein at least one of the rechargeable power sources (1, 2), being an active rechargeable power source feeding the tracker (3), is determined to have a power level below the minimum operative level; the method further comprising performing a swap so that said active rechargeable power source feeding the tracker (3) with a power level below the minimum level becomes an idle rechargeable power source.

7. The method according to claim 6 wherein the idle rechargeable power source has a power level greater than or equal to the recommended operative level for swap to be allowed.

8. The method according to claim 6 wherein the power level of the idle rechargeable power source is below the recommended operative level, the method comprising delaying the swap until recommended operative level is reached at the idle rechargeable power source (1, 2).

9. The method according to claim 8 further comprising :
- sending the solar tracker (3) to a stow position, and
- turn the solar tracker (3) off.

10. The method according to any one of claims 4 to 9, further comprising feeding the solar tracker (3) from all rechargeable power sources (1, 2) when a critical situation arises.

11. The method according to any one of claims 4 to 10, wherein the rechargeable power sources (1, 2) are a first rechargeable battery and a second rechargeable battery, independently arranged.

12. The method according to any one of claims 4 to 11, wherein the rechargeable power sources (1, 2) are groups of rechargeable battery cells defining at least two banks acting as rechargeable power sources (1, 2).

13. Solar tracker comprising a circuit arrangement as the one described in any one of claims 1 to 3.

14. Solar tracker according to claim 13 wherein the controller is configured to carry out the method of any one of claims 4 to 12.
